# EUROPÄISCHE PATENTANMELDUNG

(11) **EP 2 533 148 A1**
(43) Veröffentlichungstag der Anmeldung: **12.12.2012**
(21) Anmeldenummer: 11169048.3
(22) Anmeldetag: 08.06.2011
(51) Int. Cl.: G06F 9/44, G05B 19/418

(54) **Graphischer Editor zur Erstellen von als Automatisierungslösungen basierend auf Templates und der Ermittlung von Unterschieden in hierarchischen Datenstrukturen**

(71) Anmelder: SIEMENS AKTIENGESELLSCHAFT, 80333 München (DE)
(72) Erfinder: Brux, Martin, 91097 Oberreichenbach (DE); Popp, Manfred, 90513 Zirndorf (DE); Gross, Wolfgang, 91058 Erlangen (DE); Knappe, Gwendolin, 91054 Erlangen (DE); Kram, Raimund, 91056 Erlangen (DE); Neumann, Günter, 91336 Heroldsbach (DE)

(57) **Zusammenfassung**

Es wird ein Verfahren zum Erstellen von als Automatisierungslösung fungierenden Computerprogrammen (22) unter Verwendung technologischer Komponenten (32), mit einer einen Technologieeditor (28) umfassenden Entwicklungsumgebung (20), angegeben, wobei der Technologieeditor (28) Bestandteile (34) einer technologischen Komponente (32) jeweils im Kontext des entsprechenden Bestandteils (34) darstellt.

## Beschreibung

Die vorliegende Erfindung betrifft ein Verfahren zum Erstellen eines als Automatisierungslösung fungierenden Computerprogramms oder einer Mehrzahl solcher Programme. Derartige Verfahren sind an sich bekannt. Zum Erstellen von Automatisierungslösungen werden häufig sogenannte Entwicklungsumgebungen verwendet, die in der Fachterminologie auch als Engineeringsysteme bezeichnet werden. Die Anmelderin der vorliegenden Erfindung bietet z.B. unter der Marke STEP eine Entwicklungsumgebung, insbesondere die als "STEP5" oder "STEP7" bezeichneten Entwicklungsumgebungen, zum Erstellen von Automatisierungslösungen speziell für die von der Anmelderin unter den Marken SIMOTION, SIMATIC und SINUMERIK angebotenen Automatisierungssysteme an.

Eine Aufgabe der Erfindung besteht darin, die Möglichkeiten bisheriger Entwicklungsumgebungen zu erweitern und einen Verwender solcher Entwicklungsumgebungen, also einem Programmierer oder Projektierungsingenieur, zu unterstützen.

Diese Aufgabe wird mit einem Verfahren mit den Merkmalen des Anspruchs 1 gelöst. Dazu ist bei einem Verfahren zum Erstellen von als Automatisierungslösung fungierenden Computerprogrammen eine Verwendung technologischer Komponenten vorgesehen, wobei die Entwicklungsumgebung einen Technologieeditor umfasst und wobei der Technologieeditor Bestandteile einer technologischen Komponente jeweils im Kontext des entsprechenden Bestandteils darstellt.

Eine technologische Komponente in einem oder für ein als Automatisierungslösung fungierenden Computerprogramm ist eine Zusammenstellung von Objekten, Informationen und dergleichen, die sich insbesondere auf eine physikalische Einheit in einem durch die Automatisierungslösung zu steuernden und/oder zu überwachenden technischen Prozess bezieht. Im Extremfall kann der komplette technische Prozess als technologische Komponente modelliert sein. Auch Teilprozesse kommen zur Modellierung als technologische Komponente in Betracht. Ebenfalls können als technologische Komponente "Hilfskonstruktionen", also nicht notwendig reale Einheiten, wie zum Beispiel eine virtuelle Masterwelle, ein Nocken oder dergleichen modelliert sein. Daraus ergibt sich bereits auch, dass technologische Komponenten hierarchisch organisiert sein können und eine technologische Komponente ein oder mehrere weitere technologische Komponenten umfassen kann, wobei auch jede in diesem Sinne hierarchisch niedrigere technologische Komponente weitere technologische Komponenten umfassen kann, usw. Dies bildet reale technische oder sonstige Einheiten in einer günstigen Art und Weise ab. Als Beispiel kann auf eine Produktionsmaschine verwiesen werden, die z.B. mehrere steuerbare Achsen umfasst, wobei jede Achse zumindest einen Antrieb umfasst. Zur Modellierung einer solchen Produktionsmaschine auf Basis technologischer Komponenten kommt eine übergeordnete technologische Komponente für die Produktionsmaschine insgesamt in Betracht. Eine solche technologische Komponente kann für jede Achse der Produktionsmaschine eine eigene technologische Komponente umfassen und jede derartige technologische Komponente kann wiederum für jeden Antrieb eine nochmals weitere technologische Komponente umfassen, usw.

Wesentlich bei solchen technologischen Komponenten ist eine Zusammenfassung oder Zusammenführung bisher üblicherweise getrennt vorliegender Daten und Informationen. So könnte z.B. eine einen Antrieb abbildende technologische Komponente einerseits Programmcode für Regelungsfunktionalitäten, sodann Parameter, z.B. für Sollgeschwindigkeiten usw., aber auch Daten zur Art des Motors, z.B. dessen Leistungsklasse, Bestellnummer, usw., umfassen. Die Intention einer technologischen Komponente besteht jedenfalls darin, alle oder zumindest die wesentlichen relevanten Informationen zusammenzufassen.

Des Weiteren bieten ein Technologieeditor und die mit diesem bearbeitbaren technologischen Komponenten auch eine verbesserte Übersicht über eine jeweilige Automatisierungslösung, insbesondere eine Motion-Control-Lösung, wenn es sich um Bewegungsabläufe wie z.B. bei einer Produktionsmaschine handelt. Der Technologieeditor kann aufgrund einer zwischen mehreren technologischen Komponenten bestehenden Verschaltung Zusammenhänge zwischen diesen einfach und übersichtlich darstellen.

Indem der Technologieeditor Bestandteile einer technologischen Komponente jeweils im Kontext des entsprechenden Bestandteils darstellt, können an der Erstellung einer Automatisierungslösung beteiligte Experten aus unterschiedlichen Aufgabenbereichen (im Folgenden als Technologen bezeichnet) die jeweils für sie relevanten Aspekte einer technologischen Komponente in dem ihnen jeweils geläufigen Kontext dargestellt bekommen. Exemplarisch sei in diesem Zusammenhang auf einen Programmierer als einen an einer Erstellung einer Automatisierungslösung beteiligten Technologen verwiesen, der, sofern die technologische Komponente Programmcode und dergleichen umfasst, einen entsprechenden Bestandteil in dem ihm geläufigen Layout dargestellt bekommt.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Wenn der Technologieeditor bei der Darstellung eines Bestandteils einer technologischen Komponente in deren jeweiligen Kontext eine Navigation auf einen zugehörigen, weitergehenden Editor anbietet, ist nicht nur eine Anzeige der jeweiligen technologischen Komponente in einer dem jeweiligen Technologen geläufigen Form möglich, sondern die Möglichkeit, einen zugehörigen weitergehenden Editor aufzurufen, ermöglicht auch eine Anpassung oder Ergänzung des jeweiligen Bestandteils der technologischen Komponente, also z.B. eine Anpassung oder Ergänzung eines Programmcodes.

Wenn mittels des Technologieeditors zum Anlegen einer technologischen Komponente oder zu deren Ergänzung Vorlagen oder zusätzliche Bestandteile aus einer als Bibliothek fungierenden Datenbank ausgewählt werden, kann auf vorgegebene oder vorgebbare Vorlagen für technologische Komponenten und/oder Vorlagen für zusätzliche Bestandteile oder unmittelbar auf zusätzliche Bestandteile zurückgegriffen werden, so dass bei der Erstellung einer technologischen Komponente schon zumindest teilweise von bereits bestehenden Elementen ausgegangen werden kann. Daraus resultiert zum Einen ein Zeitgewinn, weil eine technologische Komponente oder ein davon umfasster Bestandteil nicht komplett neu definiert werden muss. Zum Anderen werden auf diese Weise zumindest zum Teil sich ansonsten ergebende Fehler vermieden, indem auf bewährte und hinsichtlich ihrer Grundfunktionalität überprüfte Elemente zurückgegriffen werden kann.

Wenn mittels des Technologieeditors aus einer technologischen Komponente eine Vorlage zur späteren Verwendung beim Anlegen neuer technologischer Komponenten erstellt und in der Bibliothek hinterlegt werden kann, kann die Bibliothek jederzeit um zusätzliche Vorlagen für weitere technologische Komponenten ergänzt werden, so dass die Bibliothek und deren Funktionsumfang stetig wächst und auf diese Weise auch projektübergreifend von den bei der Erstellung einer Automatisierungslösung gewonnenen Erkenntnissen profitiert werden kann.

Wenn mittels des Technologieeditors auswählbar ist, welche Bestandteile einer technologischen Komponente in eine zu erstellende Vorlage einfließen, kann der eine solche Vorlage erstellende Technologe den Umfang und den Inhalt der jeweiligen Vorlage äußerst genau bestimmen. Dies erleichtert zum Einen eine spätere Wiederverwendbarkeit der Vorlage, indem besonders lösungsspezifische Aspekte bei der Erstellung der Vorlage ausgenommen werden. Zum Anderen erlaubt die Möglichkeit zur Auswahl der in die Erstellung der Vorlage einfließenden Bestandteile auch einen Schutz vom beim Erstellen der technologischen Komponente entstehendem geistigen Eigentum, indem schützenswerte Aspekte nicht in eine zur Weitergabe an Dritte bestimmte Vorlage einfließen.

Wenn der Technologieeditor auf ein das jeweilige Computerprogramm ausführendes Automatisierungsgerät zugreift und für die technologische Komponente aktuelle Werte aus dem Automatisierungsgerät oder dem davon gesteuerten und/oder überwachten technischen Prozess anzeigt, ergibt sich günstig eine bisher von Programmierumgebungen speziell zum Suchen von Fehlern verwendete Funktionalität, nämlich ein Online-Zugriff auf die jeweilige Automatisierungslösung, auch auf der mit der Verwendung der technologischen Komponenten angestrebten Abstraktionsebene.

Wenn der Technologieeditor einen Generator oder dergleichen umfasst, mit dem zu einer technologischen Komponente ein ausführbarer Programmcode generiert wird, entfällt eine bisher in dieser Hinsicht erforderliche manuelle Tätigkeit eines entsprechenden Technologen. Automatisch generierter Code ist darüber hinaus üblicherweise fehlerfrei, weil Tippfehler oder dergleichen, Irrtümer bei Adresszuweisungen, usw. ausgeschlossen werden können.

Eine besondere Ausführungsform des Verfahrens zeichnet sich dadurch aus, dass der Technologieeditor eine Vergleichsfunktion umfasst, dass der Technologieeditor bei Aufruf der Vergleichsfunktion zwei oder mehrere technologische Komponenten vergleicht und sich damit eine Möglichkeit ergibt, dass etwaige Unterschiede, also sich im Rahmen des automatischen Vergleichs durch die Vergleichsfunktion ergebende Vergleichsergebnisse, angezeigt werden. Hinsichtlich der Anzeige kommt bei einer besonderen Ausführungsform dieser Ausprägung des Verfahrens eine hierarchisch strukturierte Anzeige in Betracht. Eine solche Vergleichsfunktion erleichtert den Überblick über technologische Komponenten ungemein. Speziell wenn die zu erwartende teilweise erhebliche Komplexität technologischer Komponenten in Betracht gezogen wird, ist absehbar, dass ein manueller Vergleich verschiedener technologischer Komponenten, etwa aus unterschiedlichen Revisionsständen einer Automatisierungslösung, mit einem erheblichen Aufwand einhergeht und angesichts des jeweiligen Umfangs auch äußerst fehleranfällig ist. Indem der Technologieeditor eine zur Durchführung solcher Vergleiche vorgesehene Vergleichsfunktion aufweist, kann dem Technologen oder ggf. sogar einer Gruppe von Technologen die in dieser Hinsicht bisher erforderliche intellektuelle Arbeit abgenommen werden.

Wenn der Technologieeditor im Rahmen der Funktionalität seiner Vergleichsfunktion bei einem Vergleich hierarchisch strukturierter technologischer Komponenten Vergleichsergebnisse in jeder Hierarchiestufe anzeigt und Vergleichsergebnisse aus jeweils hierarchisch niedrigeren Stufen in Form eines alle niedrigeren Stufen oder zumindest eine vorgegebene oder vorgebbare Anzahl niedrigerer Stufen zusammenfassenden Wertes angezeigt werden, ergibt sich auch bei komplexen technologischen Komponenten eine Möglichkeit zu einer übersichtlichen Darstellung der Vergleichsergebnisse. Eine Möglichkeit zur Darstellung von Vergleichsergebnissen aus hierarchisch niedrigeren Stufen besteht darin, dass eine eventuelle Anzahl von Abweichungen addiert wird, dass bei mindestens einer Abweichung in allen hierarchisch niedrigeren Stufen der zusammenfassende Wert lediglich auf das Vorliegen mindestens einer Abweichung hinweist, dass die in allen Stufen bestehenden Abweichungen in Relation zu den in allen Stufen bestehenden Übereinstimmungen gestellt werden, dass solche Relationen jeweils pro Hierarchiestufe gebildet und daraus ein Mittelwert als zusammenfassender Wert ermittelt wird, usw.

Wenn der alle niedrigeren Stufen zusammenfassende Wert durch ein in einer vorgegebenen oder vorgebbaren Rangfolge ungünstigstes Vergleichsergebnis bestimmt ist, gibt der zusammenfassende Wert eventuell einen besseren Anhalt zur Auswahl einer technologischen Komponente, wenn der Vergleich zumindest zweier technologischer Komponenten z.B. durchgeführt wurde, um eine Alternative für eine bereits verwendete technologische Komponente zu identifizieren oder wenn es darum geht, eine für eine Anwendungssituation besonders geeignete technologische Komponente zu identifizieren. Dann ist es nämlich unter Umständen wesentlicher, zu erkennen, dass einzelne Bestandteile, als hierarchisch niedrigere Ebenen der technologischen Komponente überhaupt nicht oder im Wesentlichen überhaupt nicht zu dem zu der als Vergleichsgrundlage fungierenden technologischen Komponente passen. Dies kann sich z.B. in einer Abweichung in und damit einer voraussichtlichen Notwendigkeit einer Änderung von z.B. zehn Parametern niederschlagen. In einem anderen Szenario kann allerdings bei einer technologisch weitgehenden Überlappung zweier technologischer Komponenten eine Änderung aktueller Werte von zehn oder mehr Parametern eher ein geringes Problem darstellen. Die Anzahl der ermittelten Abweichungen ist als nicht notwendig ein ausreichend aussagekräftiges Vergleichsergebnis.

Der Vorteil der Erfindung und ihrer Ausgestaltungen besteht damit insbesondere darin, dass sich der Technologieeditor durch folgende Kerneigenschaften auszeichnet: Der Technologieeditor ist zur Erstellung von technologischen Komponenten vorgesehen. Mithilfe des Technologieeditors können technologische Komponenten in einem Arbeitsbereich der jeweiligen Entwicklungsumgebung instanziiert, platziert und miteinander verschaltet werden. Die technologischen Komponenten beinhalten als Bestandteile Repräsentanten der jeweiligen technologischen Basisobjekte, also z.B. einen Bestandteil zur Repräsentation einer physikalischen Achse einer Produktionsmaschine, einen Bestandteil zur Repräsentation eines Nockens einer Produktionsmaschine, einen Bestandteil zur Repräsentation eines Messtasters einer Produktionsmaschine usw.. Die einzelnen Bestandteile einer technologischen Komponente kann man auch als Objekte auffassen, so dass sich entsprechend dem vorangehenden Beispiel als Bestandteile einer eine Produktionsmaschine darstellenden technologischen Komponente zumindest ein Achsenobjekt, ein Objekt für einen Nocken, ein Objekt für einen Messtaster, usw. ergibt. Die Verschaltung der technologischen Objekte im Technologieeditor beinhaltet einerseits technologische Verschaltungen, z.B. über einen Leitwert, und andererseits steuerungstechnische Verschaltungen, nämlich Signalflusspfade für Steuersignale, mit denen z.B. Einheiten oder Aggregate ein- oder ausgeschaltet werden und/oder Überwachungssignale, also z.B. Signale von Endschaltern. Bei der Erstellung von Verschaltungen technologischer Objekte untereinander oder in einer technologischen Komponente gewährleistet der Technologieeditor in einer besonderen Ausführungsform, dass nur typkompatible Verschaltungen unterstützt werden und erlaubt sind. Zur Erleichterung der Handhabung einer Gruppe technologischer Komponenten kann vorgesehen sein, dass der Technologieeditor eine Zusammenfassung verschalteter technologischer Komponenten zu einer übergeordneten technologischen Einheit erlaubt, wobei eine solche übergeordnete technologische Einheit dann letztlich eine technologische Komponente auf einem nochmals höheren Abstraktionsniveau darstellt. Zur Unterstützung des jeweiligen Technologen bietet der Technologieeditor geeignete Methoden für eine hierarchische Sicht auf die jeweilige technologische Komponente, nämlich z.B. eine Möglichkeit zum Zoomen und/oder zum hierarchischen Öffnen beim Verweilen z.B. mit einem Mauszeiger über einem der weiteren Bestandteile oder weitere technologische Komponenten umfassenden Bestandteil einer technologischen Komponente. Mit dem Technologieeditor können bei einer besonderen Ausführungsform den einzelnen Bestandteilen einer technologischen Komponente oder der ganzen technologischen Komponente Programme, Daten, Meldungen usw. zur Automatisierung der einzelnen Bestandteile oder der ganzen technologischen Komponente zugeordnet werden, so dass sich für den insbesondere mit der Programmierung befassten Technologen eine sogenannte Top-Down-Arbeitsweise oder eine Möglichkeit für eine solche Arbeitsweise ergibt. Zur Einbindung in die Entwicklungsumgebung ist vorgesehen, dass deren Technologieeditor beim Anlegen oder Einfügen von technologischen Komponenten oder Bestandteilen von technologischen Komponenten diese an einen Projektnavigator der Entwicklungsumgebung meldet, so dass dort eine entsprechende Anzeige, insbesondere eine entsprechende hierarchische Anzeige, möglich ist und ggf. erfolgt. Der Technologieeditor unterstützt bei einem aufgabenorientierten Vorgehen die Automatisierung der Bestandteile der technologischen Komponente oder der technologischen Komponente selbst durch einen direkten Aufruf jeweils spezifischer Editoren und dergleichen oder einen Wechsel in eine für einen solchen Editor üblicherweise vorgesehen Ansicht, um z.B. Anwenderprogramme in IEC61131-Sprachen hinzuzufügen und zu ändern, usw.. Andere Bestandteile für solche Editoren und dort erstellbare Bestandteile einer Automatisierungslösung sind Editoren für sogenannte Mensch-Maschine-Schnittstellen (HMI) und damit Umgebungen zur Erstellung von HMI-Bildschirmdarstellungen, HMI-Navigationsabläufen und dergleichen. Es werden auf diesem Wege Editoren und Ähnliches zur Erstellung von Programmen für speicherprogrammierbare Steuerungen, Antriebssteuerungen, Mensch-Maschine-Schnittstellen, Hardware-Konfiguration, Hardware-Parametrierung, etc. eingebunden. Bei einer weiteren Ausführungsform bietet der Technologieeditor die Möglichkeit, aus projektierten Inhalten wieder Bibliothekselemente zu erstellen, wobei ausgewählt werden kann, was zum neu zu erstellenden Bibliothekselement gehört und welche Anteile außerhalb des Bibliothekselements gehalten werden sollen und später bei der Verwendung über ein Außen-Interface für die technologische Komponente vorgegeben werden können (Bottom-Up-Arbeitweise). So können z.B. die Spezifikationen für die genaue Ausprägung eines Motors, eines Leistungsteils und dergleichen bewusst offen gelassen werden. Der Technologieeditor stellt auf übersichtliche und technologiebezogene Weise die Signalflüsse und/oder Wirkzusammenhänge zwischen den technologischen Komponenten und/oder deren Bestandteilen dar. Des Weiteren stellt der Technologieeditor grafisch auch Signalflüsse und Wirkzusammenhänge zwischen den von den jeweiligen technologischen Komponenten repräsentierten physikalischen und sonstigen Einheiten des jeweiligen technischen Prozesses, z.B. einer Produktionsmaschine oder dergleichen, dar. Bei einem Verpackungsprozess als Beispiel für einen technischen Prozess ergibt sich z.B. hinsichtlich einer übersichtlichen grafischen Darstellung der dafür vorgesehenen technologischen Komponenten eine Darstellung eines Quersieglers innerhalb einer horizontalen Schlauchbeutelmaschine. Indem die grafische Darstellung hierarchisch strukturiert ist, bleiben Details zunächst verdeckt und werden in einer ersten Stufe nicht angegeben. Insgesamt kann der Technologieeditor in einer Konzeptionsphase einer Automatisierungslösung, insbesondere einer Motion-Control-Lösung, auch verwendet werden, um zwischen den beteiligten Technologen eine Diskussionsgrundlage zu schaffen, die anschließend ohne Wechsel der Entwicklungsumgebung weiter verfeinert werden kann.

Soweit der Aspekt des Vergleichs technologischer Komponenten durch die vom Technologieeditor umfasste Vergleichsfunktion betroffen ist, geht dieser Aspekt von der Erkenntnis aus, dass technologische Komponenten und Bestandteile solcher technologischer Komponenten ohne eine intelligente Vergleichsfunktion in der Praxis schwer handhabbar sind. Im Lebenszyklus bzw. durch Weiterentwicklung technologischer Komponenten und davon umfasster Bestandteile entstehen unterschiedliche Versionen dieser Komponenten und Bestandteile. Eine Unterscheidung nur nach einer Versionsnummer ist üblicherweise nicht ausreichend aussagekräftig. Der Verwender und Pfleger solcher Komponenten benötigt nähere Informationen über die genauen Unterschiede. Obwohl für einzelne Detailobjekte, z.B. Programmcode, Vergleichsfunktionen bereits vorhanden sind, erhält der Anwender heute keine Unterstützung auf technologischer Ebene. Dieser Nachteil wird dadurch behoben, dass der Technologieeditor bei der vorstehend beschriebenen besonderen Ausführungsform des Verfahrens eine Vergleichfunktion umfasst und dass diese Vergleichsfunktion einen Vergleich technologischer Komponenten und davon umfasster Bestandteile erlaubt. Technologische Komponenten und davon umfasste Bestandteile können nämlich eine Vielzahl von Objekten und Informationen enthalten, z.B. Schnittstellen, Hardwarebeschreibung, Kommunikation, Dokumentation, usw., die sämtlich durch die Vergleichsfunktion berücksichtigt werden. Etwaige Unterschiede beim Ausführen der Vergleichsfunktion werden dabei in einer übersichtlichen Darstellung angezeigt. Die Darstellung der Vergleichsergebnisse erfolgt dabei zunächst ausgehend von einer obersten Hierarchieebene (Top-Down). Hierarchisch niedrigere Bestandteile vererben dabei gleichsam etwaige Unterschiede auf ihrer Ebene an die hierarchisch höher liegenden Ebenen, so dass selbst wenn z.B. auf der hierarchisch obersten Ebene keine Unterschiede bestehen und ausschließlich diese Ebene angezeigt wird, dennoch ein Hinweis auf bestehende Unterschiede erfolgt, wenn sich solche in hierarchisch niedrigeren Ebenen finden. Im Weiteren ist es möglich, einen Detailvergleich in die Tiefe bis auf jeden einzelne Bestandteil/jedes einzelne Objekt/jede einzelne Information durchzuführen. Dabei werden vorhandene Möglichkeiten integriert, z.B. Funktionen zum Vergleich von Programmcode, Detailvergleichsfunktionen einer Quelle, Topologievergleiche, etc.. Zur schnellen Erkennung eventueller Unterschiede können an sich bekannte technische Hilfsmittel verwendet werden, z.B. die Bildung sogenannter Hash-Werte über Hardwarebeschreibungen, Beschreibungen von Schnittstellen zwischen Hardware und Software, Kommunikationsbeschreibungen, Konfigurationsdaten, usw.. Der Vergleich kann zwischen Online-Elementen erfolgen und zwar sowohl innerhalb eines Projektes wie auch projektübergreifend und ermöglicht so den Vergleich von Versionen der technologischen Komponenten und/oder der davon umfassten Bestandteile. Die Herkunft der jeweils verglichenen Objekte spielt dabei grundsätzlich keine Rolle, so dass z.B. auch eine instanziierte technologische Komponente und ein Element aus einer Bibliothek miteinander verglichen werden können. Andererseits kann sich der Vergleich auch auf Offline-Elemente einerseits und in eine Maschine oder ein sonstiges Automatisierungsgerät geladene Online-Elemente andererseits beziehen. Damit ist ein Vergleich zwischen den Projektierungsdaten einerseits und ein Vergleich zwischen den tatsächlich verwendeten Daten andererseits möglich ist. Auf diesem Wege können etwaige Unterschiede zwischen den Offline- und den Online-Elementen aufgedeckt werden, die sich z.B. ergeben, wenn ein Betreiber einer Maschine nach deren Inbetriebsetzung selbständig Änderungen oder Ergänzungen vorgenommen hat. Für einzelne Daten der technologischen Komponenten und der davon umfassten Bestandteile können Attribute vorgesehen sein, die kennzeichnen, ob diese für den Vergleich relevant sind. Auf diese Art und Weise kann der Vergleich beschleunigt werden und insgesamt wird das Vergleichsergebnis aussagekräftiger, wenn bei einem solchen Vergleich z.B. nicht berücksichtig wird in den verglichenen technologischen Komponenten zum Beispiel unterschiedliche Geschwindigkeitssollwerte hinterlegt sind, die systematisch unerheblich sind oder ob bei einer ersten technologischen Komponente eine Klartextbezeichnung in Grußbuchstaben eingegeben ist, während bei einer Vergleichskomponente eine inhaltlich gleichbedeutende Klartextbezeichnung in Groß- und Klein-Schreibweise angegeben ist.

Für die Darstellung der Vergleichsergebnisse können vorgegebene oder vorgebbare Filter verwendet werden, über die gesteuert wird, was als unterschiedlich angezeigt werden kann. Bei einer besonderen Ausführungsform ist eine Konfigurierbarkeit der Darstellung der Vergleichsergebnisse für unterschiedliche Aspekte vorgesehen, so dass z.B. eine Darstellung einer erkannten Abweichung als Folgeänderung von einer anderen erkannten Abweichung möglich ist. Bei einer anderen Automatisierungssystemführungsform kann die Eindringtiefe bei Detailvergleichen begrenzt werden, damit lässt sich z.B. einerseits ein Expertenlevel und andererseits ein Anwenderlevel hinsichtlich des Detaillierungsgrads der Darstellung von Vergleichsergebnissen und Abgleichmöglichkeiten definieren. Durch eine übersichtliche Darstellung der Vergleichsergebnisse, ggf. bis ins Detail, ist eine Risikobetrachtung der erkannten Abweichungen, gleich ob diese auf zwischenzeitlich vorgenommenen Änderungen, etwa aufgrund von Weiterentwicklungen oder dergleichen, oder auf systematischen Unterschieden basieren, möglich. Auf der Basis erkannter Abweichungen besteht die Möglichkeit eines Abgleichs der jeweils betrachteten technologischen Komponenten oder der jeweils davon umfassten Bestandteile. Ein solcher Abgleich kann die gesamte technologische Komponente, ein oder mehrere Bestandteile solcher technologischer Komponenten und/oder davon umfasster Objekte betreffen. Art und Umfang des Abgleichs lassen sich dabei vom Benutzer beeinflussen und anstelle eines Abgleichs oder einer Übernahme in eine der beiden verglichenen technologischen Komponenten oder deren jeweilige Bestandteile kann auch eine neue technologische Komponente oder ein neuer Bestandteil für eine technologische Komponente erzeugt werden, der die beiden ursprünglich verglichenen Einheiten unverändert lässt.

Die oben genannte Aufgabe wird auch mit einem Programmiergerät oder dergleichen zur Erstellung von als Automatisierungslösung fungierenden Computerprogrammen, das nach dem Verfahren wie hier und im Folgenden beschrieben arbeitet und dazu als Mittel zur Durchführung des Verfahrens insbesondere eine Verarbeitungseinheit nach Art eines Mikroprozessors und einen Speicher umfasst, wobei in den Speicher ein durch die Verarbeitungseinheit ausführbares Computerprogramm zur Implementierung des Verfahrens und/oder einzelner oder aller Ausgestaltungen geladen ist. Die Erfindung ist damit auch ein solches Computerprogramm mit durch einen Computer, insbesondere ein Programmiergerät, ausführbaren Programmcodeanweisungen und andererseits ein Speichermedium mit einem derartigen Computerprogramm sowie schließlich auch ein Computer oder Programmiergerät, in dessen Speicher als Mittel zur Durchführung des Verfahrens und seiner Ausgestaltungen ein solches Computerprogramm geladen oder ladbar ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit sie Prüf- und Arbeitsverfahren betreffen.

Es zeigen
- FIG 1: einen technischen Prozess, für den mit einer Entwicklungsumgebung eine Automatisierungslösung erstellt wird, wobei die Entwicklungsumgebung einen Technologieeditor umfasst,
- FIG 2: eine mögliche Bildschirmausgabe des Technologieeditors sowie insoweit eine mit dem Technologieeditor bearbeitbare technologische Komponente und
- FIG 3: einen Vergleich zweier technologischer Komponenten durch eine Vergleichsfunktion des Technologieeditors.

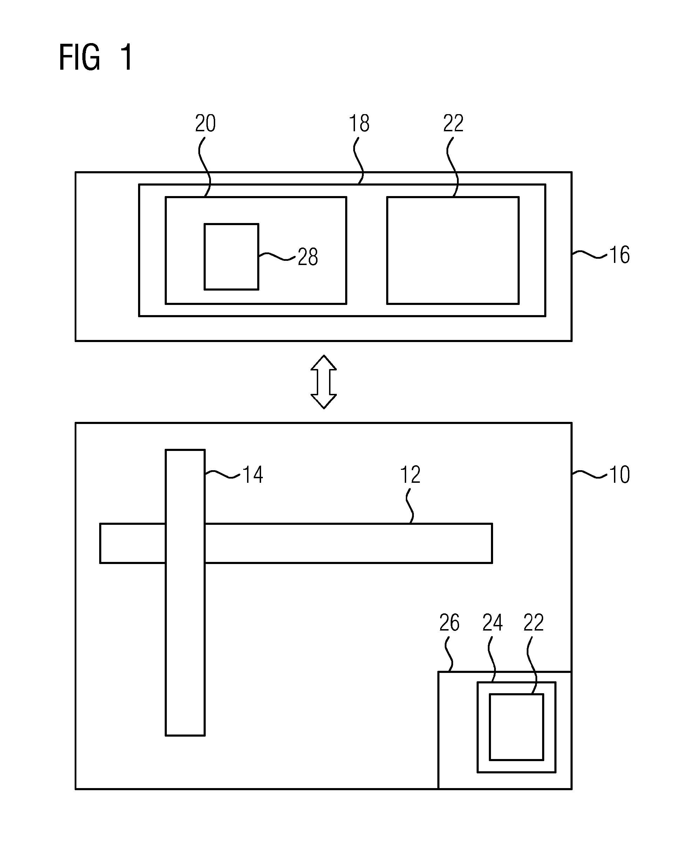

FIG 1 zeigt schematisch vereinfacht als Beispiel für einen zu steuernden und/oder zu überwachenden technischen Prozess 10 eine Produktionsmaschine mit einer ersten und einer zweiten Achse 12, 14. Zur Entwicklung einer Automatisierungslösung für den jeweiligen technischen Prozess 10 ist ein Programmiergerät 16 oder dergleichen vorgesehen. Dieses umfasst in an sich bekannter Art und Weise eine Verarbeitungseinheit nach Art eines Mikroprozessors und einen Speicher 18. In den Speicher 18 ist ein als Entwicklungsumgebung 20 fungierendes Computerprogramm geladen. Die Entwicklungsumgebung 20 ist zum Erstellen von als Automatisierungslösung fungierenden Computerprogrammen 22 bestimmt. Das oder jedes auf diese Weise erstellte Computerprogramm wird zu gegebener Zeit im technischen Prozess installiert, also zum Beispiel in einen Speicher 24 einer Steuerungseinheit 26 der Produktionsmaschine 10 geladen.

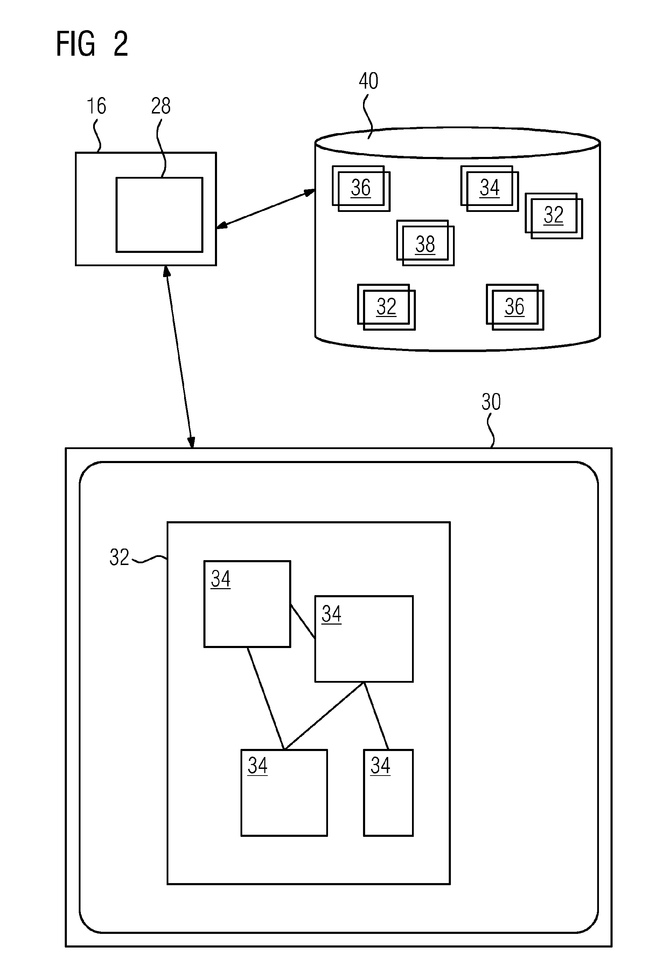

Bei dem hier vorgestellten Ansatz ist vorgesehen, dass die Entwicklungsumgebung 20 einen Technologieeditor 28 umfasst. Der Technologieeditor 28 ist eine Teilfunktionalität der Entwicklungsumgebung 20 und damit ebenfalls ein Computerprogramm oder ein Computerprogrammmodul. Der Technologieeditor 28 und dessen Funktionalität werden im Folgenden anhand von FIG 2 weiter erläutert.

FIG 2 zeigt beispielhaft eine mögliche Bildschirmausgabe des Technologieeditors 28 (FIG 1) auf einem vom Programmiergerät 16 umfassten oder von diesem ansteuerbaren Monitor 30. Nachdem das hier beschriebene Verfahren zum Erstellen von als Automatisierungslösung fungierenden Computerprogrammen 22 auf einer Verwendung technologischer Komponenten 32 basiert, ist durch den Technologieeditor 28 eine Darstellung solcher technologischer Komponenten 32 vorgesehen, damit Technologen, nämlich Projektierungsingenieure, Programmierer, Maschinenbauer, usw., mit den technologischen Komponenten 32 arbeiten können. Speziell ist vorgesehen, dass der Technologieeditor 28 Bestandteile, Objekte, Elemente, Daten oder dergleichen 34 - hier und im Folgenden unter dem Begriff "Bestandteil" zusammengefasst - einer technologischen Komponente 32 jeweils im Kontext des entsprechenden Bestandteils 34 darstellt.

Eine technologische Komponente 32 bildet insbesondere eine reale physikalische Einheit aus dem technischen Prozess 10 oder den technischen Prozess 10 selbst oder einzelne Teilprozesse ab. Im weiteren wird davon ausgegangen, dass die in FIG 2 dargestellte technologische Komponente 32 die Produktionsmaschine 10 aus FIG 1 abbildet. Damit ist es sinnvoll, wenn die technologische Komponente 32 als Bestandteile 34 Elemente umfasst, die deren Achsen 12, 14 abbilden. Als weiterer Bestandteil 34 und insofern ein Beispiel für eine nicht-physikalische Einheit, kommt Programmcode zur Steuerung der Produktionsmaschine 10 oder deren Achsen 12, 14 oder weiterer Einheiten der Produktionsmaschine 10 in Betracht. Indem der Technologieeditor 28 Bestandteile 34 einer technologischen Komponente 32 jeweils im Kontext des entsprechenden Bestandteils 34 darstellt, erfolgt zum Beispiel eine Darstellung eines Programmcode repräsentierenden Bestandteils 34 in einer Art und Weise, dass der jeweilige Bestandteil 34 zumindest als Programmcode umfassend oder Programmcode repräsentierend erkennbar ist. Ähnliches gilt entsprechend für einen Bestandteil, der zur Repräsentation maschinenbaulicher Einzelheiten einer der Achsen 12, 14 vorgesehen ist. Die einzelnen Darstellungsmöglichkeiten sind dabei vergleichsweise vielfältig, so dass hier nicht versucht wird, dies zeichnerisch wiederzugeben. Im Übrigen sind die in Betracht kommenden Darstellungsmöglichkeiten an sich bekannt und dem Fachmann damit geläufig.

Der Technologieeditor 28 erlaubt eine Verschaltung mehrerer technologischen Komponente 32 (nur eine dargestellt) oder auch ein Verschaltung der Bestandteile 34 einer technologischen Komponente 32 sowie eine Verschaltung der Bestandteile 34 einer technologischen Komponente 32 mit einzelnen Bestandteilen 34 einer weiteren technologischen Komponente 32. Die Bearbeitung einer technologischen Komponente 32 erfolgt dabei unter Verwendung üblicher Eingabegeräte, nämlich zum Beispiel Tastatur und Maus. Auf diesem Wege kann auch ein bereits in dessen jeweiligem Kontext dargestellter Bestandteil 34 der technologischen Komponente 32 zur Bearbeitung in einem zugehörigen, weitergehenden Editor, zum Beispiel einer Programmierumgebung, geöffnet werden. Zu diesem Zweck bietet der Technologieeditor 28 bei der Darstellung eines Bestandteils 34 einer technologischen Komponente 32 in deren jeweiligem Kontext eine Navigation auf einen zugehörigen, weitergehenden Editor an. Zu diesem Zweck kann die graphische Repräsentation des jeweiligen Bestandteils 34 als mit der Maus aktivierbar gestaltet sein, so dass eine derartige Aktivierung, zum Beispiel durch Doppelklick, den jeweiligen weitergehenden Editor startet oder zu einem solchen Editor umschaltet.

Die Darstellung in FIG 2 zeigt auch, dass mittels des Technologieeditors 28 zum Anlegen einer technologischen Komponente 32 oder zu deren Ergänzung Vorlagen 36 oder zusätzliche Bestandteile 34 oder Vorlagen 38 für zusätzliche Bestandteile 34 aus einer als Bibliothek 40 fungierenden Datenbank auswählbar sind. Zusätzlich oder alternativ kann mittels des Technologieeditors 28 aus einer technologischen Komponente 32 eine Vorlage 36 zur späteren Verwendung beim Anlegen neuer technologischer Komponenten 32 erstellt und in der Bibliothek 40 hinterlegt werden. Zum Hinterlegen in der Bibliothek 40 kommen gleichfalls Vorlagen 38 für Bestandteile 34 einer technologischen Komponente 32 in Betracht. Ebenfalls können in der Bibliothek 40 unmittelbar verwendbare technologische Komponenten 32 abgelegt sein. Bei deren Instanziierung für eine konkrete Automatisierungslösung können die für die technologische Komponente 32 vorgesehenen Daten und Funktionalitäten unmittelbar verwendet werden, ohne dass es einer Anpassung bedarf.

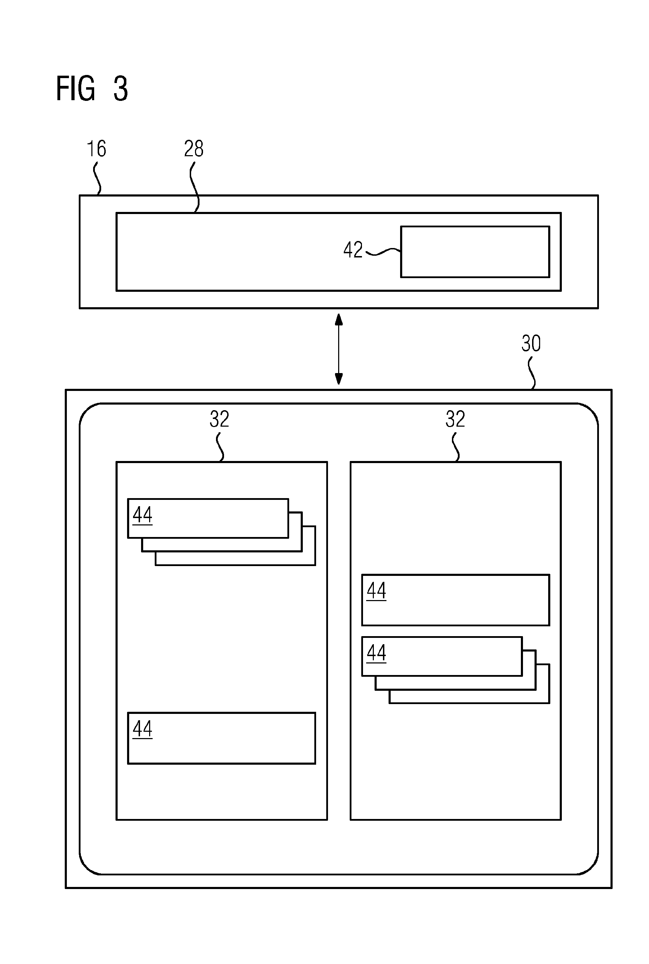

FIG 3 zeigt schematisch stark vereinfacht eine Ausführungsform des Technologieeditors 28, nämlich einen eine Vergleichsfunktion 42 umfassenden Technologieeditor 28. Durch den Aufruf der Vergleichsfunktion 42 wird der Technologieeditor 28 in die Lage versetzt, zwei oder mehrere technologische Komponenten 32 zu vergleichen. Die jeweils einem Vergleich unterzogenen, mindestens zwei technologischen Komponenten 32 können entweder in der Entwicklungsumgebung 20 vorliegen (Offline-Offline-Vergleich) oder auch wenigstens eine auf der Steuerungseinheit 26 (FIG 1). Wenn die technologischen Komponenten 32 in der Entwicklungsumgebung 20 vorliegen, wird ein Offline-Offline-Vergleich durchgeführt. Wenn mindestens eine technologische Komponenten 32 auf der Steuerungseinheit 26 in den Vergleich einbezogen wird, wird ein "Offline-Online-Vergleich" durchgeführt. Darüber hinaus kommt auch in Betracht, in den Vergleich Vorlagen 36, 38 für technologisiche Komponenten einzubeziehen, um auf diese Weise zum Beispiel für eine konkrete Automatisierungslösung besonders in Betracht kommende Vorlagen 36, 38 zu ermitteln.

Die sich dabei ergebenden Vergleichsergebnisse 44 werden durch die Vergleichfunktion 42 oder den Technologieeditor 28 anzeigt. FIG 3 zeigt insoweit nebeneinander zwei durch die Vergleichsfunktion 42 überprüfte technologische Komponenten 32 und die sich dabei für jede technologische Komponente 32 ergebenden Vergleichsergebnisse 44. Die Anzeige erfolgt dabei zum Beispiel hierarchisch strukturiert. Auf eine detaillierte Darstellung einzelner Vergleichsergebnisse 44 wurde verzichtet. Dem Fachmann sind unterschiedlichste Darstellungsformen von Vergleichsergebnissen 44 unmittelbar geläufig.

Eine Besonderheit bei der Darstellung von Vergleichsergebnissen 44 besteht darin, dass vorgesehen sein kann, dass der Technologieeditor 28 bei einem Vergleich hierarchisch strukturierter technologischer Komponenten 32 Vergleichsergebnisse 44 in jeder Hierarchiestufe anzeigt und dass Vergleichsergebnisse 44 aus jeweils hierarchisch niedrigeren Stufen in Form eines alle niedrigeren Stufen zusammenfassenden Werts angezeigt werden. Zur Verdeutlichung dieses Aspekts sei angenommen, dass eine technologische Komponente 32 in fünf Hierarchiestufen jeweils einen Bestandteil 34 oder ein sonstiges Element umfasst. Für jeden Bestandteil 34 - oder, speziell bei komplexeren technologischen Komponenten 32, für jede Hierarchiestufe - kann nun ein Maß für die ermittelten Abweichungen bestimmt werden. Zur sprachlich leichten Darstellung wird angenommen, dass das Maß für die ermittelten Abweichungen als Prozentwert angegeben wird, so dass sich zum Beispiel für die exemplarisch angenommenen fünf Hierarchiestufen die folgenden Zahlenwerte ergeben: 10%, 0%, 60%, 20%, 70%. Indem Vergleichsergebnisse 44 aus jeweils hierarchisch niedrigeren Stufen in Form eines alle niedrigeren Stufen zusammenfassenden Werts angezeigt werden, ist zum Beispiel sichergestellt, dass bei einer Auswahl der zweiten Ebene nicht "0%" angezeigt und damit suggeriert wird, dass keine weiteren Abweichungen vorliegen. Tatsächlich ist es bei besonderen Ausführungsformen günstig, wenn der alle niedrigeren Stufen zusammenfassende Wert durch ein in einer vorgegebenen oder vorgebbaren Rangfolge ungünstigstes Vergleichsergebnis 44 bestimmt ist. Eine auf dieser Basis erfolgende Anzeige würde zum Beispiel darauf hinweisen, dass "zumindest noch eine 70%-ige Abweichung" besteht. Ohne einen Ausdruck etwaiger Abweichungen in Form von Zahlenwerten kommt auch eine Angabe wie "keine Abweichungen", "geringe Abweichungen", "deutliche Abweichungen", usw. in Betracht, wobei ausgehend vom o.g. Beispiel bei einer in einer niedrigen Ebene detektierten deutlichen Abweichung auch in darüber liegenden Ebenen stets auf die noch verbleibenden deutlichen Abweichungen hingewiesen wird.

Einzelne im Vordergrund stehende Aspekte der hier eingereichten Beschreibung lassen sich damit kurz wie folgt zusammenfassen: Es wird die Definition eines Technologieeditors 28 zum Engineering der Automatisierung insbesondere einer Produktionsmaschine basierend auf technologischen Komponenten 32 vorgeschlagen. Der Technologieeditor 28 ist in eine aufgabenorientierte/aufgabenstrukturierte Entwicklungsumgebung 20 zur Erstellung der jeweiligen Automatisierungslösung integriert und ermöglich die Verwendbarkeit der Entwicklungsumgebung 20 und des Technologieeditors 28 während einer Konzeptphase, während einer späteren Implementierung der Details, während einer Service-/Inbetriebnahmephase und bei evtl. späteren Wartungsarbeiten. Der Technologieeditor 28 ermöglicht dabei stets eine ganzheitliche Sicht auf die technologische(n) Komponente(n) 32 und erlaubt die Einbeziehung von Anwenderprogrammen, HMI-Darstellungen und HMI-Abläufen, maschinenbaulichen Aspekten, usw..

## Patentansprüche

1. Verfahren zum Erstellen von als Automatisierungslösung fungierenden Computerprogrammen (22) unter Verwendung technologischer Komponenten (32),
mit einer einen Technologieeditor (28) umfassenden Entwicklungsumgebung (20),
wobei der Technologieeditor (28) Bestandteile (34) einer technologischen Komponente (32) jeweils im Kontext des entsprechenden Bestandteils (34) darstellt.

2. Verfahren nach Anspruch 1, wobei der Technologieeditor (28) bei der Darstellung eines Bestandteils (34) einer technologischen Komponente (32) in deren jeweiligem Kontext eine Navigation auf einen zugehörigen, weitergehenden Editor anbietet.

3. Verfahren nach Anspruch 1 oder 2, wobei mittels des Technologieeditors (28) zum Anlegen einer technologischen Komponenten oder zu deren Ergänzung Vorlagen (36, 38) oder zusätzliche Bestandteile (34) aus einer als Bibliothek (40) fungierenden Datenbank ausgewählt werden.

4. Verfahren nach Anspruch 3, wobei mittels des Technologieeditors (28) aus einer technologischen Komponente (32) eine Vorlage (36, 38) zur späteren Verwendung beim Anlegen neuer technologischer Komponenten (32) erstellt und in der Bibliothek (40) hinterlegt wird.

5. Verfahren nach Anspruch 4, wobei mittels des Technologieeditors (28) ausgewählt wird, welche Bestandteile (34) der technologischen Komponente (32) in die zu erstellende Vorlage (36, 38) einfliessen.

6. Verfahren nach einem der vorangehenden Ansprüche, wobei der Technologieeditor (28) auf ein das jeweilige Computerprogramm (22) ausführende Gerät (26) zugreift und für die technologische Komponente (32) aktuelle Werte aus dem Gerät (26) anzeigt.

7. Verfahren nach einem der vorangehenden Ansprüche, wobei der Technologieeditor (28) einen Generator umfasst, mit dem zu einer technologischen Komponente (32) ausführbarer Programmcode generiert wird.

8. Verfahren nach einem der vorangehenden Ansprüche, wobei der Technologieeditor (28) eine Vergleichsfunktion (42) umfasst, wobei der Technologieeditor (28) bei Aufruf der Vergleichsfunktion (42) zwei oder mehrere technologische Komponenten (32) vergleicht und sich dabei ergebende Vergleichsergebnisse (44) anzeigt, insbesondere hierarchisch strukturiert anzeigt.

9. Verfahren nach Anspruch 8, wobei der Technologieeditor (28) bei einem Vergleich hierarchisch strukturierter technologischer Komponenten (32) Vergleichsergebnisse (44) in jeder Hierarchiestufe anzeigt und wobei Vergleichsergebnisse (44) aus jeweils hierarchisch niedrigeren Stufen in Form eines alle niedrigeren Stufen zusammenfassenden Werts angezeigt werden.

10. Verfahren nach Anspruch 9, wobei der alle niedrigeren Stufen zusammenfassende Wert durch ein in einer vorgegebenen oder vorgebbaren Rangfolge ungünstigstes Vergleichsergebnis (44) bestimmt ist.

11. Computerprogramm mit Programmcode-Mitteln, um alle Schritte von jedem beliebigen der Ansprüche 1 bis 10 durchzuführen, wenn das Computerprogramm auf einem Programmiergerät zur Erstellung von als Automatisierungslösung fungierenden Computerprogrammen (22) ausgeführt wird.

12. Programmiergerät zur Erstellung von als Automatisierungslösung fungierenden Computerprogrammen (22), mit einem Speicher und einer Verarbeitungseinheit nach Art eines Mikroprozessors, wobei in den Speicher ein durch die Verarbeitungseinheit ausführbares Computerprogramm nach Anspruch 11 geladen ist.

13. Digitales Speichermedium mit elektronisch auslesbaren Steuersignalen, die so mit einer Verarbeitungseinheit eines Programmiergeräts nach Anspruch 12 zusammenwirken können, dass ein Verfahren nach einem der Ansprüche 1 bis 10 ausgeführt wird.
